# EUROPEAN PATENT APPLICATION

(11) **EP 1 241 213 A2**
(43) Date of publication of application: **18.09.2002**
(21) Application number: 02005267.6
(22) Date of filing: 11.03.2002
(51) Int. Cl.: C08K 5/3415, C08K 5/092, C08L 21/00, B60C 1/00

(54) **Tire with tread of rubber composition which contains 1,3-bis-(citraconimidomethyl) benzene or pentaerythritol triacrylate**

(30) Priority: 15.03.2001 US 810022
(71) Applicant: THE GOODYEAR TIRE & RUBBER COMPANY, Akron, Ohio 44316-0001 (US)
(72) Inventor: Deevers, Susan Lynn, Uniontown, Ohio 44865 (US)
(74) Representative: Leitz, Paul

(57) **Abstract**

The invention relates to a tire with a tread of a sulfur cured diene-based rubber composition which contains 1,3-bis-(citraconimidomethyl) benzene or pentaerythritol triacrylate.

## Description

The invention relates to a tire with a tread of a sulfur cured diene-based rubber composition which contains 1,3-bis-(citraconimidomethyl) benzene or pentaerythritol triacrylate.

### Background of the Invention

Heat durability of a tire tread is often a factor for vehicular tires intended to be driven at relatively high speeds. Heat is inherently generated within a tire tread rubber compound as the tire is driven at relatively high speeds resulting in a temperature rise within the tire tread itself.

It is desired to reduce the rate of temperature rise within a sulfur cured tire tread rubber composition with an attendant increase in its heat durability. Accordingly, it was discovered that an inclusion of 1,3-bis-(citraconimidomethyl) benzene or pentaerythritol triacrylate in the tread rubber composition retarded the rate of temperature rise within the tread rubber composition.

While 1,3-bis-(citraconimidomethyl) benzene and pentaerythritol triacrylate might be recognized as anti-reversion agents for various rubber compositions, its use in retarding a temperature rise in a tread rubber composition to be used on a tire to be operated at relatively high speeds is considered herein to be a discovery and not predictable without an experimental trial and error.

In the description of this invention, the term "phr," where used herein, and according to conventional practice, refers to "parts of a respective material per 100 parts by weight of rubber or elastomer".

In the description of this invention, the terms "rubber" and "elastomer," if used herein, may be used interchangeably, unless otherwise prescribed. The terms "rubber composition," "compounded rubber" and "rubber compound," if used herein, are used interchangeably to refer to "rubber which has been blended or mixed with various ingredients and materials" and such terms are well known to those having skill in the rubber mixing or rubber compounding art. The terms "cure" and "vulcanize" may also be used interchangeably unless otherwise noted.

### Summary and Description of the Invention

In accordance with this invention, a tire is provided with a circumferential tread designed to ground-contacting of a rubber composition comprised of, based upon parts by weight per 100 parts by weight rubber (phr)
(A) 100 phr by weight of at least one diene-based elastomer,
(B) about 0.5 to about 10 phr of 1,3-bis-(citraconimidomethyl) benzene or pentaerythritol triacrylate, and
(C) about 30 to about 110 phr of reinforcing filler as
   (1) from zero to about 95, alternately about 5 to about 95, phr of rubber reinforcing carbon black, and
   (2) from zero to about 110, alternately about 15 to about 105, phr of aggregates of precipitated silica, wherein said precipitated silica contains hydroxyl groups (e.g. silanol groups) in its surface, and
(D) a coupling agent for said silica having one moiety reactive with said hydroxyl groups of said silica and another moiety interactive with at least one of said elastomer(s).

In practice, such coupling agent may be, for example, a bis(3-triethoxysilylpropyl) polysulfide, which contain from 2 to 8 with an average of (a) from 2 to 2.6 or (b) from 3.5 to 4, connecting sulfur atoms in their polysulfidic bridge.

In one aspect of the invention, a tire with tread is provided wherein said tread is of a cap/base construction, wherein said tread cap is designed to be ground contacting, wherein said tread base underlies said tread cap and is not intended to be ground contacting, wherein said rubber tread cap is the tread of this invention and wherein said rubber tread base is exclusive of said 1,3-bis-(citraconimidomethyl) benzene and pentaerythritol triacrylate.

A significant aspect of this invention is reduced rate of heat generation as evidenced by a reduced rate of temperature rise and therefore an increase in a tire's speed value.

The 1,3-bis-(citraconimidomethyl) benzene may be obtained as Perkalink® 900 from the Flexsys Company. The pentaerythritol triacrylate may be obtained as Sartomer® SR444 from the Elastochem Company.

While the mechanism might not be fully understood, these additives are believed to aid in resisting degradation of sulfur cured diene-based elastomer compositions and to assist in maintaining various physical properties of such cured elastomer composition at elevated temperatures under dynamic working conditions by repairing the sulfur crosslinks as they break down (reversion effect) and replacing them with more thermally stable carbon-to-carbon crosslinks.

The carbon black desired for use in this invention is a rubber reinforcing carbon black such as, for example, at least one of N110, N220, N234, and N134 carbon blacks, although other carbon blacks may be used. Such N-designation numbers are well known ASTM designations.

In the practice of this invention, the rubber composition for the tire tread is comprised of at least one and preferably at least two, diene-based elastomer(s). Representative of such elastomers are, for example, cis 1,4-polyisoprene rubber, 1,4-polybutadiene rubber, styrene/butadiene copolymer rubbers, isoprene/butadiene copolymer rubbers, styrene/isoprene copolymer rubbers, styrene/isoprene/butadiene terpolymer rubbers and high vinyl polybutadiene rubber which has a vinyl 1,2-content in a range of from about 30 to about 90 percent and their mixtures. A minor amount (e.g. from about 10 to about 30 phr, of at least one of trans 1,4-polybutadiene and 3,4-polyisoprene may also be used.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, coupling agent, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur-vulcanizable and sulfur-vulcanized material (rubbers), the additives mentioned above are selected and commonly used in conventional amounts.

The composition of the present invention may contain conventional amounts of known rubber chemicals.

Typical amounts of tackifier resins, if used, may comprise about 0.5 to about 10 phr, usually about 1 to about 5 phr. Typical amounts of plasticizers comprise about 1 to about 50 phr. Such plasticizers can include, for example, aromatic, napthenic, and/or paraffinic processing oils. Typical amounts of antioxidants comprise about 1 to about 5 phr. Representative antioxidants may be, for example, diphenyl-p-phenylenediamine and others such as, for example, those disclosed in The Vanderbilt Rubber Handbook (1978), Pages 344 through 346. Typical amounts of antiozonants comprise about 1 to 5 phr. Typical amounts of fatty acids, if used, which are usually comprised primarily of stearic acid, comprise about 0.5 to about 3 phr. Typical amounts of zinc oxide comprise about 2 to about 5 phr. Typical amounts of waxes comprise about 1 to about 5 phr. Often microcrystalline waxes are used. Typical amounts of peptizers comprise about 0.1 to about 1 phr. Typical peptizers may be, for example, pentachlorothiophenol and dibenzamidodiphenyl disulfide.

The vulcanization of the rubber composition is conducted in the presence of a sulfur-vulcanizing agent. Examples of suitable sulfur-vulcanizing agents include elemental sulfur (free sulfur) or sulfur-donating vulcanizing agents, for example, an amine disulfide, polymeric polysulfide or sulfur olefin adducts. Preferably, the sulfur-vulcanizing agent is elemental sulfur. As known to those skilled in the art, sulfur-vulcanizing agents are used in an amount ranging from about 0.5 to about 4 phr, or even, in some circumstances, up to about 8 phr, with a range of from about 1.5 to about 2.5 being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from about 0.5 to about 4, preferably about 0.8 to about 2, phr. In another embodiment, combinations of a primary and a secondary accelerator might be used with the secondary accelerator being used in amounts of about 0.05 to about 0.5 phr in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The presence and relative amounts of most of the above additives are not considered to be an aspect of the present invention, unless otherwise observed.

The rubber composition may be and is preferably prepared by mixing the diene-based rubber, carbon blacks and other rubber compounding ingredients, exclusive of the rubber curatives, in at least one sequential mixing step with at least one mechanical mixer, usually referred to as "non-productive" mix stage(s), to a temperature in a range of about 150°C to about 180°C for one to about 4 minutes, followed by a final mix stage in which the curatives, such as sulfur and accelerators, are added and mixed therewith for about 1 to about 4 minutes to a temperature within a range of about 90°C to about 125°C. The terms "non-productive" and "productive" mix stages are well known to those having skill in the rubber mixing art.

It is to be appreciated that the rubber composition is conventionally cooled to a temperature below about 40°C between the aforesaid mix stages.

It is to be further appreciated that the aforesaid duration of time for the required temperature maintenance for the mixing process(es) during the non-productive mix stages can be accomplished, for example, by
(A) adjusting the motor speed of the mixer, namely reducing the motor speed after the desired temperature of the rubber composition is reached, in a variable speed mixer or by
(B) utilizing two or more mix stages sufficient to satisfy the duration requirement for the aforesaid maximum mixing temperature maintenance.

Vulcanization of the rubber composition of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air or in a salt bath.

Upon vulcanization of the sulfur-vulcanized composition, the rubber composition of this invention can be used for various purposes. For example, the sulfur-vulcanized rubber composition may be in the form of a tread for a pneumatic tire which is the subject of this invention. Such tires can be built, shaped, molded and cured by various methods which are known and will be readily apparent to those having skill in such art. As can be appreciated, the tire may be a passenger tire, aircraft tire, truck tire and the like. Preferably, the tire is a passenger tire. The tire may also be radial or bias, with a radial tire being preferred.

The invention may be better understood by reference to the following examples in which the parts and percentages are by weight unless otherwise indicated.

### EXAMPLE I

In this example, rubber compositions were prepared which were comprised of a blend of cis 1,4-polybutadiene rubber and emulsion polymerization prepared styrene/butadiene rubber and N134 carbon black reinforcing filler.

Sample A was a Control Sample comprised of such elastomers and reinforcing filler. Sample B was the same as Sample A except that it also contained 1,3-bis-(citraconimidomethyl) benzene. Sample C was the same as Sample A except that it also contained pentaerythritol triacrylate.

The compositions were prepared by mixing the ingredients in several stages, namely, one non-productive stage (without the curatives) followed by a productive mix stage (for the curatives), then the resulting composition was cured under conditions of elevated pressure and temperature.

For the non-productive mixing stage, exclusive of the accelerator(s) and sulfur curatives which are mixed (added) in the final, productive mixing stage, the ingredients, including the elastomers, are mixed for about four minutes to a temperature of about 160°C. In a final productive mixing stage the curatives are mixed with the rubber composition (mixture) in a Banbury type mixer; namely, the accelerator(s) and sulfur to a maximum temperature of about 110°C for about three minutes.

The resulting rubber compositions were then vulcanized at a temperature of about 150°C for about 18 minutes.

The following Table 1 relates to the ingredients used for the Control and Sample A formulations.

**Table 1**

| Materials | Control Sample A | Sample B | Sample C |
|---|---|---|---|
| Non-Productive Mixing | | | |
| E-SBR Rubber¹ | 70 | 70 | 70 |
| Polybutadiene Rubber² | 30 | 30 | 30 |
| Carbon black³ | 80 | 80 | 80 |
| Zinc oxide | 4 | 4 | 4 |
| Stearic acid | 2 | 2 | 2 |
| | | | |

| Productive Mixing | | | |
|---|---|---|---|
| 1,3-bis-(citraconimidomethyl) benzene⁴ | 0 | 1 | 0 |
| Pentaerythritol triacrylate⁵ | 0 | 0 | 1.4 |
| Sulfur | 0.9 | 0.9 | 0.9 |
| Accelerator(s)⁶ | 3.9 | 3.9 | 3.9 |

| | | | |
|---|---|---|---|
| ¹Emulsion polymerization prepared styrene/butadiene rubber obtained as PLF1712 from the Goodyear Tire & Rubber Company | | | |
| ²Cis 1,4-polybutadiene rubber obtained as BUD1254 from The Goodyear Tire & Rubber Company | | | |
| ³N134 carbon black, an ASTM designation | | | |
| ⁴1,3-bis-(citraconimidomethyl)benzene obtained as Perkalink 900 from the Flexsys company | | | |
| ⁵Pentaerythritol triacrylate obtained as Sartomer SR444 from the Elastochem company. | | | |
| ⁶Of the sulfenamide/thiuram type | | | |

The physical properties for the resulting vulcanized rubber compositions are shown in the following Table 2.

The various tests are considered herein to be well known to those having skill in such analytical art. A description of the anti-reversion test may be found in U.S. Patent No. 5,736,611.

In the following Table, the term "MDR" refers to Monsanto's Moving Die Rheometer.

**Table 2**

| | Control Sample A | Sample B | Sample C |
|---|---|---|---|
| Original Properties (14'/160°C) | | | |
| 300% modulus (MPa) | 5.8 | 5.3 | 5.2 |
| Tensile strength (MPa) | 18.6 | 18.1 | 17.8 |
| Elongation (%) | 646 | 660 | 673 |
| | | | |

| Blowout Test (ASTM D623) | | | |
|---|---|---|---|
| 14'/160°C; Time, minutes | 2 | 4.5 | 4.5 |
| Temp, °C | 43 | 61 | 63 |
| 28'/160°C; Time, minutes | 4 | 5 | 5 |
| Temp,°C | 60 | 62 | 62 |
| | | | |

| MDR Rheometer 170°C | | | |
|---|---|---|---|
| Minimum torque (dNm) | 2.4 | 2.4 | 2.8 |
| Maximum torque (dNm) | 15.2 | 18 | 12.3 |
| Net torque (dNm) | 12.7 | 15.7 | 9.5 |
| T25 (minutes) | 0.9 | 2.1 | 2 |
| T90 (minutes) | 2.6 | 4.6 | 3.5 |
| Reversion (time in minutes for 2% drop in torque) | 60+ | 60+ | 20.4 |
| | | | |

| Rebound | | | |
|---|---|---|---|
| Zwick rebound (ASTM D1054) at 100°C | 44.8 | 4.5 | 44 |

From Table 2 it is seen that blowout times (e.g. the time in minutes until the rubber composition has a heat related failure) for Samples B and C were significantly greater than the blowout time for Control Sample A.

Furthermore, the blowout temperatures (the temperature reached at the time of failure) for Samples B and C were significantly greater for the 14 minute/160°C blowout test for Control Sample A. The blowout temperature for Samples B and C were extended for the 28 minute/160°C blowout test as compared to Control Sample A. This is considered herein to be significant because the blowout test values of the reported times and temperatures compare the fatigue characteristics and rate of heat generation of the individual Samples when the Samples are subjected to the dynamic compressive strains, or elongations of the blowout test.

It is concluded herein, from the results reported in Table 2, that Samples B and C have undergone physical reversions at significantly higher temperatures than Control Sample A with a corresponding increase the time to failure. Such results are predictive of higher speed operability rating for a tire having a tread of such composition.

### EXAMPLE II

Tires of size P215/65R15 were prepared with treads of the rubber compositions of Control Sample A, Sample B and Sample C and are identified herein as Control Tire AA, Tire BB and Tire CC, respectively.

The tires were tested by mounting on rigid metal rims and the resulting tire/rim assemblies (wheels) mounted on a 67 inch (170 cm) diameter flywheel test machine (dynamometer) where the wheels were operated a relatively high speeds in a step-wise sequential speed increase in individual speed steps of 10 kph in accordance with SAE high speed test No. J1561. The speed and time to failure of the respective tires were observed. In particular, the tires were initially operated at an equivalent vehicular speed of about 150 kph and the speed increased by 10 kph increments every 10 minutes. The results of the step-wise speed test are reported in the following Table 2 in terms of the individual speed step reached and the time to failure at that individual speed step. For example, as reported in Table 2, Control Tire AA reached a 200 kph speed step before failure and operated for 9 minutes of a 10 minute duration at that speed step.

**Table 2**

| Control Tire AA | Tire BB | Tire CC |
|---|---|---|
| 9' at 200 kph | 4' at 210 kph | 2' at 210 kph |
| 10' at 193 kph | 4' at 210 kph | 1' at 210 kph |
| 7' at 193 kph | 9' at 210 kph | 6' at 210 kph |

From Table 2 it can be seen that Tire BB and Tire CC consistently achieved one speed step higher than the Control Tire AA. This is considered herein to be significant because the increase in high speed endurance is a desirable feature for a tire. This improvement was achieved by the associated rubber composition modification without undergoing an expensive tire design modification.

While certain representative embodiments and details have been shown for the purpose of illustrating the invention, it will be apparent to those skilled in this art that various changes and modifications may be made therein without departing from the spirit or scope of the invention.

## Claims

1. A tire with a circumferential tread designed to ground-contacting of a rubber composition **characterized by** being comprised of, based upon parts by weight per 100 parts by weight rubber (phr)
(A) 100 phr by weight of at least one diene-based elastomer,
(B) about 0.5 to about 10 phr 1,3-bis-(citraconimidomethyl) benzene or pentaerythritol triacrylate,
(C) about 30 to about 110 phr of reinforcing filler as
(1) about zero to about 90 phr of rubber reinforcing carbon black, and
(2) from zero to about 110 phr of aggregates of precipitated silica, wherein said precipitated silica contains hydroxyl groups on its surface, and
(D) a coupling agent for said silica having one moiety reactive with said hydroxyl groups of said silica and another moiety interactive with at least one of said elastomer(s).

2. The tire of claim 1 **characterized in that** said tread contains 1,3-bis-(citraconimidomethyl) benzene to the exclusion of pentaerythritol triacrylate.

3. The tire of claim 1 **characterized in that** said tread contains pentaerythritol triacrylate to the exclusion of 1,3-bis-(citraconimidomethyl) benzene.

4. The tire of any of the preceding claims **characterized in that** said tread contains precipitated silica and said coupling agent for said silica.

5. The tire of claim 4 **characterized in that** said coupling agent is a bis(3-trialkoxysilylalkyl) polysulfide having an average of from 2 to 2.6, or from 3.5 to 4, connecting sulfur atoms in its polysulfidic bridge.

6. The tire of claim 5 **characterized in that** said coupling agent is a bis(3-triethoxysilylpropyl) polysulfide.

7. The tire of any of the preceding claims **characterized by** having a rubber tread of a cap/base construction, wherein said tread cap is designed to be ground contacting, wherein said tread base underlies said tread cap and is not intended to be ground contacting, wherein said rubber tread cap is the tread of claim 1 and wherein said rubber tread base is exclusive of said 1,3-bis-(citraconimidomethyl) benzene and pentaerythritol triacrylate.

8. The tire of any of the preceding claims **characterized in that** said diene-based elastomer is comprised of at least two elastomers selected from cis 1,4-polyisoprene rubber, 1,4-polybutadiene rubber, styrene/butadiene copolymer rubbers, isoprene/butadiene copolymer rubbers, styrene/isoprene copolymer rubbers, styrene/isoprene/butadiene terpolymer rubbers and high vinyl polybutadiene rubber which has a vinyl 1,2-content in a range of from about 30 to about 90 percent, and their mixtures.

9. The tire of any of the preceding claims **characterized in that** said reinforcing filler is:
(A) about 5 to about 95 phr of rubber reinforcing carbon black, and
(B) about 15 to about 105 phr of aggregates of precipitated silica.
